# EUROPEAN PATENT SPECIFICATION

(11) **EP 2 599 648 B1**
(45) Date of publication and mention of the grant of the patent: **04.01.2017**
(21) Application number: 12191190.3
(22) Date of filing: 05.11.2012
(51) Int. Cl.: B60C 25/138, B60C 25/05

(54) **Operating head for removing and fitting tyres on rims for vehicles**
Betriebskopf zum Entfernen und Anbringen von Reifen auf Felgen für Fahrzeuge
Tête fonctionnelle pour placer et supprimer des pneus sur jantes de véhicules

(30) Priority: 02.12.2011 IT MO20110316
(43) Date of publication of application: 05.06.2013
(73) Proprietor: Giuliano Group S.p.A., 42015 Correggio (RE) (IT)
(72) Inventor: Bonacini, Maurizio, 42015 Correggio (RE) (IT)
(74) Representative: Brunacci, Marco

(56) References cited:
- EP-A1- 2 174 807
- EP-A1- 2 233 325
- EP-A1- 2 463 125
- US-A1- 2002 162 633

## Description

The present invention relates to an operating head for removing and fitting wheel tyres for vehicles.

It is known that vehicle wheels generally comprise a metal rim having along the perimeter thereof annular flanges amid which are fitted fast up the end portions, so-called "beads", of an elastic tyre.

The use is currently known of so-called "tyre-changing" machines, suitable for removing and fitting the tyre from the relevant rim for carrying out, e.g., maintenance, repair or replacement jobs.

In particular, different types of tyre-changing machines of automatic type are known comprising an operating head having a retracting tool for removing the tyre and which is associated with a mobile arm of the machine movable in terms of height and horizontally by means of relevant actuators.

The removal tool has a curved end part suitable for gripping the tyre bead.

In particular, the removal tool is mobile, by means of a machine actuator commonly mounted on the mobile arm, between a bead gripping position, in which it extends from the operating head and positions between the annular flange of the rim and a section of the tyre to be removed, and a position of extraction of the edge of the tyre, in which it is raised to remove the section of the bead gripped above the annular flange of the rim.

During use, an operator positions and blocks the wheel on the coupling and rotation means and, by means of a special beading tool, performs a preliminary detachment phase of the tyre bead from the annular flanges of the rim. Subsequently, the operator regulates the position of the operating head with respect to the frame according to the specific dimensions of the wheel.

The tool is then conveyed to the fastening position and the end part of the tool presses on the side of the tyre until it is introduced between the tyre bead and the relevant flange on the rim, until the hooked extremity of the tool is positioned so as to withhold the tyre bead.

Subsequently, the tool is positioned in the extraction position so as to extract a portion of the bead above the rim.

The rotation of the rim then enables the entire bead to come out of the respective flange.

These known machines do however have a number of drawbacks.

Using the operating head of such machines of known type, it is not in fact possible to correctly perform the extraction of all types of tyres.

For example, in the case of motor vehicle wheel tyres, the above operating head of known type cannot be used; due to the small width of such tyres, in the fitting position, the mobile tool would end up inserting itself too deeply between the rim edge and the tyre bead, thus damaging both the tyre and the rim. Furthermore, in the case of very soft tyres, it becomes very hard to extract the tyre bead over the rim edge by means of the operating head of known type, inasmuch as during the movement of the tool as far as the fitting position, the side of the tyre is pressed downwards and yields elastically without ever permitting the hooked end of the tool from being positioned below the tyre bead.

In particular, to remove types of tyres such as those mentioned above, a traditional so-called "turret" tool is commonly used, fixed to the tool-holder arm of the tyre-changing machine, together with the use of a special bead-lifting lever.

In practice, a hooked extremity of the lever is inserted manually between the rim edge and a section of the bead to be lifted and a suitable horizontal portion of the turret acts as a support and as a fulcrum for the lever during bead extraction.

To overcome such drawbacks, from the document no. EP 2 174 807 an operating head is known for removing and fitting tyres, which has a mobile tyre removing tool and which is fittable and removable to/from the tool-holder arm of a tyre-changing machine by means of quick-coupling means.

This way, in the event of particular tyres having to be removed such as those described above, the operating head can be quickly removed from the tool-holder arm of the tyre-changing machine to fasten a traditional turret onto it. Nevertheless, before the tyre removing operation, the operating head will have to be replaced.

Documents US 2002/0162633 A1 and EP 2 233 325 A1 disclose known apparatuses for detaching a bead of a tyre from the rim edge of the wheel.

Document EP 2 463 125 A1 further discloses a device for demounting a tire from a rim comprising a support element, a demounting lever and an actuator borne by the support element and set to act on the demounting lever in order to make the demounting lever angularly move during use.

The main aim of the present invention is to provide an operating head for removing and fitting wheel tyres for vehicles that allows to remove and fit all types of tyres.

Another object of the present invention is to provide an operating head for removing and fitting wheel tyres for vehicles that allows to overcome the mentioned drawbacks of the background art or that represents a valid alternative solution to the background art, in the ambit of a simple, rational, easy, effective to use and low cost solution.

The above objects are achieved by this operating head for removing and fitting wheel tyres for vehicles, comprising supporting means associable with a tyre-changing machine, at least a reference element associated with said supporting means and positionable in the proximity of a section of the edge of the rim of a wheel fixed on said tyre-changing machine, during the removal operation of a tyre from said rim, at least a removal tool having a free extremity substantially hook-shaped, associated with said supporting means and movable between a fastening position, wherein said tool extends from said supporting means beyond said reference element to fit between said edge of the rim and said tyre and to position said free extremity below the bead of said tyre, and an extraction position, wherein said free extremity is arranged in correspondence to said reference element to extract said bead of the tyre above said edge of the rim, characterized by the fact that it comprises positioning means for positioning said tool in a disengagement position, wherein said tool is substantially moved away with respect to said reference element.

Other characteristics and advantages of the present invention will become more evident from the description of a preferred, but not sole, embodiment of an operating head for removing and fitting wheel tyres for vehicles, illustrated purely as an example but not limited to the annexed drawings in which:
figure 1 is a side view which shows a tyre-changing machine with the operating head according to the invention;
figures 2, 3, 4 and 5 are side views that show different positions of the tool of the operating head according to the invention during a removal operation of a tyre from the rim of a wheel;
figures 6 and 7 are axonometric views that show the operating head according to the invention with the tool arranged in the extraction position and with the tool arranged in the disengagement position, respectively.

With particular reference to such figures, globally indicated by 1 is an operating head fittable on a tyre-changing machine A of conventional type and usable for removing and fitting a tyre B from/onto the rim C of a wheel D.

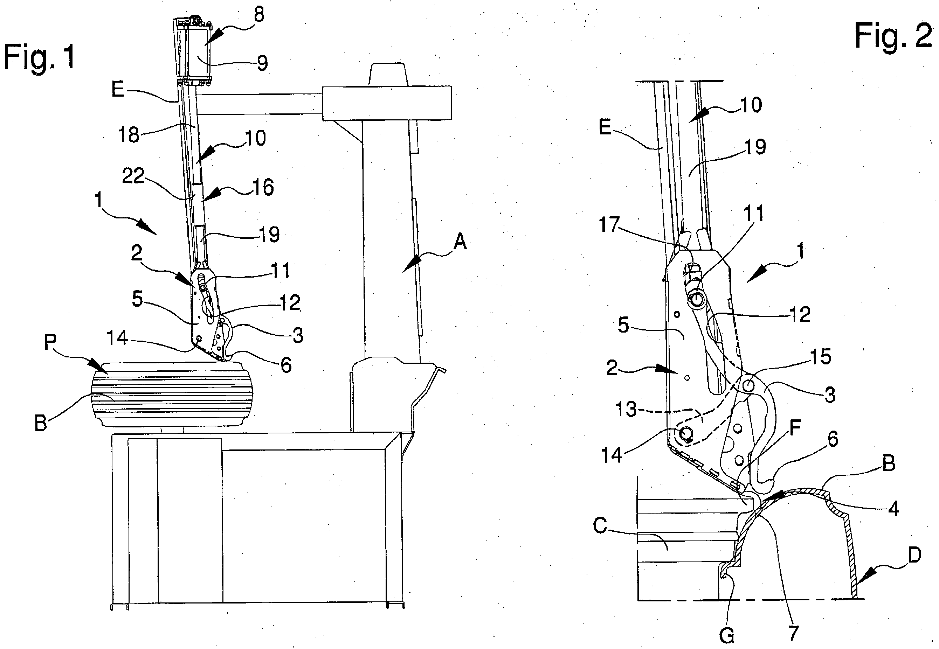

Figure 1 shows the operating head 1 installed on a tyre-changing machine A of conventional type. Nevertheless, the installation and use of the operating head 1 on tyre-changing machines of different type cannot be ruled out.

The operating head 1 comprises supporting means, generally indicated by the reference 2, fixable to the mobile arm E of a tyre-changing machine A and suitable for supporting a tool 3 usable for removing the tyre B from the rim C.

The operating head 1, furthermore, comprises a reference element 4, which is positionable in the proximity of a section of the edge F of the rim C during the removal operations of the tyre B and which is usable to support the bead G of the tyre B during the fitting operations.

In particular, the reference element 4 has a substantially widened shape reproducing at least in part a section of the perimeter profile of the edge F of the rim C.

With reference to the particular embodiment shown in the illustrations, the reference element 4 is fixed to the lower extremity of the mobile arm E of the tyre-changing machine A.

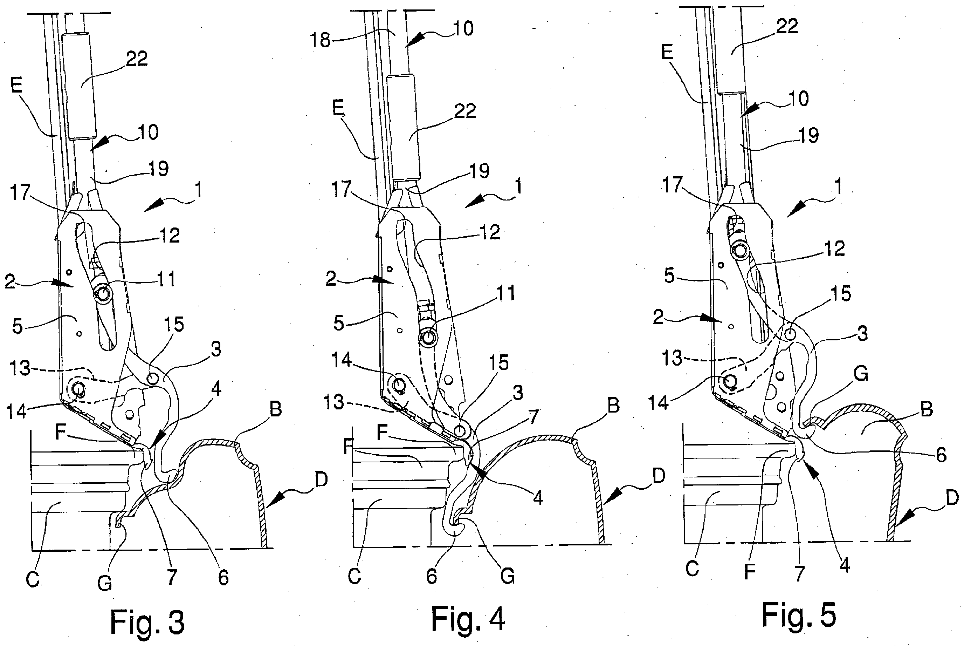

The supporting means 2 also comprise a pair of supports 5 substantially plate shaped, vertical and parallel to and distanced from each other, between which is supported the tool 3, which are fixed at the bottom to the reference element 4. Usefully, the tool 3 has a substantially elongated shape and a free extremity 6 substantially hook-shaped and is supported by the supports 5 moving between:
- a fastening position (figure 4), wherein the tool 3 extends from the supports 5 beyond the reference element 4 to insert itself between the edge F of the rim C and the tyre B and to position the free extremity 6 below the bead G of the tyre, in a grip and retention position of such bead G;
- an extraction position (figure 5), wherein the free extremity 6 of the tool 3 is arranged in correspondence to the reference element 4, substantially superimposed on a protruding appendix 7 of the reference element itself, for the purpose of removing the bead G of the tyre over the edge F of the rim C.

The operating head 1 comprises actuator means 8 operatively connected to the tool 3 and suitable for moving the tool 3 between the above fastening and extraction positions.

In particular, with reference to the embodiment shown in the illustrations, the actuator means 8 are made up of an actuator device having a fixed portion 9 associated with the arm E and a mobile portion, generally indicated by the reference 10, movable along a substantially straight direction.

Preferably, the actuator device 8 is made up of a linear actuator, of the type of a pneumatic cylinder or the like.

The tool 3 is hinged revolving by means of a first pin 11 to the mobile portion 10 of the actuator device 8, in correspondence to an opposite extremity with respect to the hook-shaped free extremity 6.

Advantageously, the operating head 1 comprises means for transforming the movement produced by the actuator device 8 into a rotary-translatory movement of the tool 3.

In particular, such movement transformation means move the tool 3 between the fastening position and the extraction position and, during such movement, the hook-shaped free extremity 6 of the tool itself substantially follows the internal profile of the rim C which goes from the stop edge F of the bead G as far as the internal housing channel of the tyre B.

Such movement of the hook-shaped free extremity 6 allows reducing to the utmost the stresses to which the bead G of the tyre B is subject during removal operations.

The movement transformation means comprise a curvilinear guide 12 made on the supports 5 into which the first pin 11 fixed to the tool 3 engages sliding.

In particular, the curvilinear guide 12 is made up of a pair of curvilinear slots 12, obtained on the supports 5, inside which the first pin 11 engages sliding. Usefully, the fixed portion 9 of the actuator device 8 is hinged to the arm E of the tyre-changing machine so as to allow the actuator device itself to swing in accordance with the trajectory of the first pin 11 inside the curvilinear slots 12. The movement transformation means also comprise a connecting rod 13 having one extremity hinged to the supports 5, in correspondence to a second pin 14, and an opposite extremity hinged to a substantially intermediate portion of the tool 3, in correspondence to a third pin 15.

The sliding of the first pin 11 inside the curvilinear slots 12, together with the rotation of the connecting rod 13 around the third pin 15, thanks to suitable sizings and a suitable shape of the tool 3, allow obtaining the above movement of the hook-shaped free extremity 6 along the internal profile of the rim C so as to reduce to the utmost the stresses to which the bead G of the tyre B is subject during removal operations.

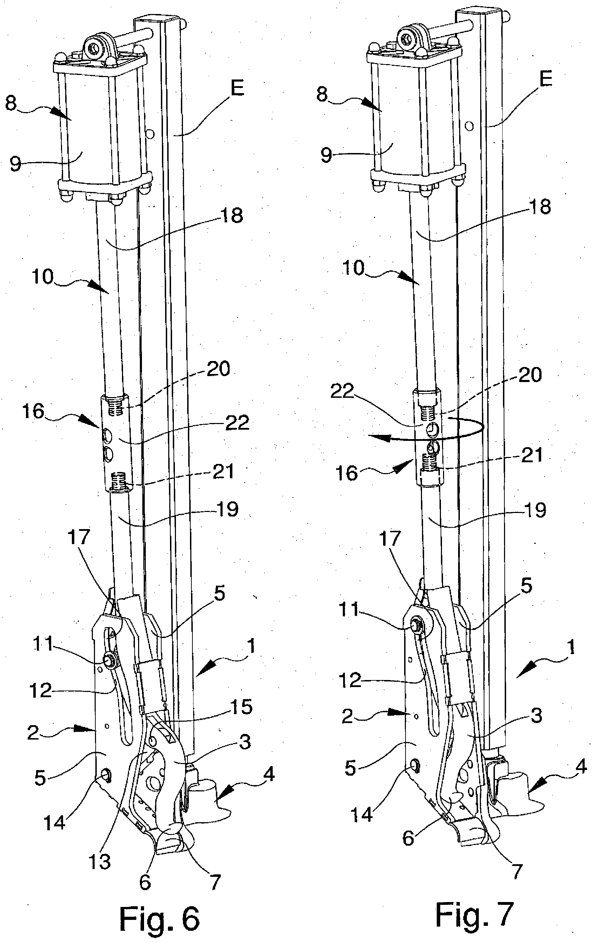

Advantageously, the operating head 1 comprises positioning means 16 of the tool 3 in a disengagement position (figure 7), wherein the tool 3 is moved away with respect to the reference element 4.

In particular, the positioning of the tool 3 in the disengagement position allows correctly performing the extraction of any type of tyre, overcoming the limits of the operating heads of known type.

In fact, with the tool 3 in such disengagement position, the operating head 1 and, in particular, the reference element 4 can be used as a conventional turret. For example, in the case of wheel tyres for motor-vehicles or particularly soft tyres, the reference element 4 can be used together with a conventional bead-lifting lever to remove the tyre B.

In practice, one extremity of the lever is fitted between the edge F of the rim C and a section of the bead G to be lifted and the protruding appendix 7 acts as support and fulcrum for the lever during the extraction of the bead G.

With special reference to the embodiment shown in the illustrations, the positioning means 16 are suitable for moving the tool 3 between the extraction position (figure 6) and the disengagement position (figure 7) along a direction of moving away/close with respect to the protruding appendix 7 of the reference element 4.

In particular, in the disengagement position, the free extremity 6 of the tool 3 is retracted with respect to the protruding appendix 7 of the reference element 4. Furthermore, in the disengagement position, the tool 3 is housed integrated inside a suitable housing obtained between the two supports 5.

Usefully, the curvilinear slots 12 have an extension 17 extending on the supports 5 along the above direction of moving away/close with respect to the protruding appendix 7 of the reference element 4.

This way, the first pin 11 can run along such extension 17, allowing the movement of the tool 3 from the extraction position to the disengagement position.

With special but not sole reference to the embodiment shown in the illustrations, the positioning means 16 are made up of adjustment means for adjusting the length of the mobile portion 10 of the actuator device 8.

In particular, the mobile portion 10 of the actuator device 8 comprises a first rod 18 operatively associated with a fixed portion 9 of the actuator device 8 and movable with respect to such fixed portion 9 to move the tool 3 between the fastening position and the extraction position.

The mobile portion 10 also comprises a second rod 19 associated with the tool 3 and arranged coaxial with respect to the first rod 18.

Usefully, the adjustment means 16 for adjusting the length of the mobile portion 10 are made up of screw-nut screw coupling means placed between the first rod 18 and the second rod 19.

In particular, the screw-nut screw coupling means 16 comprise a first threaded portion 20 made at the extremity of the first rod 18 opposite the fixed portion 9 of the actuator device 8 and a second threaded portion 21 made at the extremity of the second rod 19 opposite the tool 3.

The screw-nut screw coupling means 16 also comprise a connection element 22 having two threaded holes substantially opposite one another, inside which are engaged revolving the first and the second threaded portions 20 and 21 respectively of the first and second rods 18 and 19.

Preferably, the connection element 22 is made of an element with an elongated and tubular shape.

In practice, the axial rotation of the connection element 22 in a clockwise direction or in an anti-clockwise direction is suitable for moving closer or away to/from one another the first and the second rods 18 and 19, by in fact shortening or lengthening the mobile portion 10 of the actuator device 8.

In particular, the approach of the second rod 19 to the first rod 18 involves the movement of the tool 3 from the extraction position (figure 6) to the disengagement position (figure 7).

Different embodiments of the positioning means 16 cannot however be ruled out.

For example, the positioning means 16 can be realized by means of adjustment means for adjusting the position of the actuator device 8 with respect to the supports 5.

In particular, such means of realization of the position of the actuator device 8 can be made of a suitable adjustment device placed between the fixed portion 9 of the actuator device itself and the arm E of the tyre-changing machine A.

This way, the entire actuator device 8 can be moved upwards, with consequent movement of the tool 3 from the extraction position to the disengagement position.

Alternatively, the positioning means 16 can be made up of the actuator device 8 itself.

In this case, e.g., the actuator device 8 is made up of a multi-stage actuator able to move the tool 3 between the extraction position and the fastening position during the normal use of the operating head 1, and able to move the tool 3 from the extraction position to the disengagement position (and vice versa) when the use of the operating head 1 is required as a conventional turret.

Further different embodiments of the positioning means 16 cannot furthermore be ruled out.

Usefully, the operating head 1 can be associated in a removable way with the arm E of the tyre-changing machine A by means of quick-coupling means.

In this case, the actuator device 8 can also be supported by the supporting means 2 rather than by the arm E of the tyre-changing machine A.

This way, the removal and fitting of the entire operating head 1 can be done simply and quickly.

The presence of the quick-coupling means, in particular, also allows a simple use of the operating head according to the invention on different types of tyre-changing machines, eliminating or in any case reducing to the utmost the need to make structural changes to the operating head or to the machine itself.

The operation of the operating head 1 is the following.

During the removal operation of the tyre B, the operating head 1 is moved by means of the arm E and is lowered until the reference element 4 is positioned in correspondence to the perimeter edge F of the rim C; in such initial position, the tool 3 is in the extraction position (figure 2).

By means of the actuator device 8, the tool 3 is then moved from the extraction position to the fastening position, with a movement of the hook-shaped free extremity 6 which follows the internal profile of the rim C (figures 3 and 4).

In such fastening position, the free extremity positions underneath the bead G and grips it (figure 4).

Always by means of the actuator device 8, the tool 3 is then returned from the fitting position to the extraction position with the lifting of the section of the bead G gripped above the edge F of the rim C (figure 5).

The subsequent rotation of the wheel D on the tyre-changing machine A allows extracting the bead G from the annular flange of the rim C along the entire perimeter of the tyre B.

With reference to the use of the positioning means 16, when the operator has to perform the removal of special tyres, such as e.g., particularly soft tyres or motor-vehicles tyres, which could not be removed using the tool 3, then the operator operates the positioning means 16 to move the tool 3 to the disengagement position.

In particular, the rotation of the connection element 22 reduces the length of the mobile portion 10 of the actuator device, dragging the first pin 11 inside the extension 17 of the curvilinear slots 12 and consequently moving the integrated tool 3 between the supports 5, with the hook-shaped free extremity 6 retracted with respect to the protruding appendix 7 of the reference element 4.

This way, the reference element 4 can be used together with a conventional bead-lifting lever to remove the tyre B from the rim C.

In practice, one extremity of the lever is fitted between the edge F of the rim C and a section of the bead G to be lifted and the protruding appendix 7 acts as a support and fulcrum for the lever during the extraction of the bead G.

It has in fact been ascertained how the described invention achieves the proposed objects.

In particular, the fact is underlined that the positioning means for positioning the tool in the disengagement position allow performing the removal and the fitting of any type of tyre.

## Claims

1. Operating head (1) for removing and fitting wheel tyres for vehicles, comprising supporting means (2), fixable to the mobile arm (E) of a tyre-changing machine (A), at least a reference element (4) fixable to the mobile arm (E) and positionable in the proximity of a section of the edge (F) of the rim (C) of a wheel (D) fixed on said tyre-changing machine (A), during the removal operation of a tyre (B) from said rim (C), at least a removal tool (3) having a free extremity (6) substantially hook-shaped, supported by said supporting means (2) and movable between a fastening position, wherein said tool (3) extends from said supporting means (2) beyond said reference element (4) to fit between said edge (F) of the rim (C) and said tyre (B) and to position said free extremity (6) below the bead (G) of said tyre (B), and an extraction position, wherein said free extremity (6) is arranged in correspondence to said reference element (4), substantially superimposed on a protruding appendix (7) of the reference element itself, to extract said bead (G) of the tyre (B) above said edge (F) of the rim (C), **characterized by** the fact that it comprises positioning means (16) for positioning said tool (3) between said extraction position and a disengagement position along a direction of moving away/close with respect to said protruding appendix (7), wherein in said disengagement position said free extremity (6) of the tool (3) is retracted with respect to said protruding appendix (7).

2. Operating head (1) according to the claim 1, **characterized by** the fact that said positioning means (16) are suitable for moving said tool (3) between said extraction position and said disengagement position along a direction of moving away/close with respect to said reference element (4), said free extremity (6) of the tool (3) being substantially retracted with respect to said reference element (4) in said disengagement position.

3. Operating head (1) according to one or more of the preceding claims, **characterized by** the fact that said supporting means (2) comprise at least a housing suitable for housing at least in part said tool (3) in said disengagement position.

4. Operating head (1) according to one or more of the preceding claims, **characterized by** the fact that it comprises actuator means (8) associated with said tool (3) and suitable for moving said tool (3) between said fastening position and said extraction position.

5. Operating head (1) according to the claim 4, **characterized by** the fact that said actuator means (8) comprise at least an actuator device (8) having at least a mobile portion (10) movable along a substantially straight direction.

6. Operating head (1) according to the claim 5, **characterized by** the fact that said tool (3) is associated revolving with said mobile portion (10) of the actuator device (8).

7. Operating head (1) according to one or more of the preceding claims, **characterized by** the fact that it comprises transformation means (11, 12, 13, 14, 15) for transforming the movement produced by said actuator means (8) into a rotary-translatory movement of said tool (3), wherein said tool (3) is moved between said fastening position and said extraction position and said substantially hook-shaped free extremity (6) follows at least in part the profile of the rim (C) of said wheel (D).

8. Operating head (1) according to the claim 7, **characterized by** the fact that said transformation means (11, 12, 13, 14, 15) comprise at least a curvilinear guide (12) wherein at least a first pin (11) engages sliding associated with said tool (3).

9. Operating head (1) according to the claim 8, **characterized by** the fact that said curvilinear guide (12) comprises a curvilinear slot (12) obtained onto at least a support (5) of said supporting means (2) inside which said first pin (11) engages sliding.

10. Operating head (1) according to the claim 9, **characterized by** the fact that said transformation means (11, 12, 13, 14, 15) comprise at least a connecting rod (13) having an extremity associated revolving with said support (5), in correspondence to a second pin (14), and an opposite extremity hinged to a substantially intermediate portion of said tool (3), in correspondence to a third pin (15).

11. Operating head (1) according to one or more of the preceding claims, **characterized by** the fact that said positioning means (16) comprise adjustment means (16) suitable for adjusting the length of said mobile portion (10) of the actuator device (8).

12. Operating head (1) according to one or more of the preceding claims, **characterized by** the fact that said positioning means (16) comprise adjustment means for adjusting the position of said actuator device (8) and/or of said mobile portion (10) with respect to said supporting means (2).

13. Operating head (1) according to one or more of the preceding claims, **characterized by** the fact that said positioning means (16) are made up of said actuator device (8), wherein said actuator device (8) comprises at least a multistage actuator suitable for moving said tool (3) between said fastening position and said extraction position and between said extraction position and said disengagement position.

14. Operating head (1) according to the claim 11, **characterized by** the fact that said mobile portion (10) of the actuator device (8) comprises:
- at least a first rod (18) operatively associated with a fixed portion (9) of said actuator device (8) and movable with respect to said fixed portion (9) to move said tool (3) between said fastening position and said extraction position;
- at least a second rod (19) associated with said tool (3) and arranged coaxial to said first rod (18);
and by the fact that said adjustment means (16) for adjusting the length of the mobile portion (10) comprise screw-nut screw coupling means (16) placed between said first rod (18) and said second rod (19).

15. Operating head (1) according to the claim 14, **characterized by** the fact that said screw-nut screw coupling means (16) comprise at least a threaded portion (20, 21) made along at least a section of at least one between said first rod (18) and said second rod (19), and at least a connection element (22) associated revolving with said first and second rods (18, 19) and having at least a threaded hole inside which said threaded portion (20, 21) is engaged, the rotation of said connection element (22) in one direction or the other of said connection element (22) being suitable for moving close or away to/from each other said first and second rods (18, 19), by shortening or lengthening said mobile portion (10) of the actuator device (8).

16. Operating head (1) according to the claim 15, **characterized by** the fact that said screw-nut screw coupling means (16) comprise a first threaded portion (20) made at the extremity of said first rod (18) opposite said fixed portion (9) of the actuator device (8) and at least a second threaded portion (21) made at the extremity of said second rod (19) opposite said tool (3), said first and second threaded portion (20, 21) being fitted inside respective threaded holes made on said connection element (22).

## Patentansprüche

1. Betriebskopf (1) zum Entfernen und Anbringen von Radreifen für Fahrzeuge, mit einer Trägereinrichtung (2), die an dem beweglichen Arm (E) einer Reifen-Wechselmaschine (A) befestigt werden kann, wenigstens einem Bezugselement (4), das an dem beweglichen Arm (E) befestigt werden kann und in der Nähe eines Bereichs der Kante (F) der Felge (C) eines an der Reifen-Wechselmaschine (A) befestigten Rades (D) während des Entfernungsvorgangs eines Reifens (B) von der Felge (C) positioniert werden kann, wenigstens einem Entfernungswerkzeug (3) mit einem im Wesentlichen hakenförmigen freien Ende (6), das durch die Trägereinrichtung (2) getragen wird und bewegbar ist zwischen einer Befestigungsposition, in welcher sich das Werkzeug (3) von der Trägereinrichtung (2) über das Bezugselement (4) hinaus erstreckt, so dass dieses zwischen die Kante (F) der Felge (C) und den Reifen (B) passt und das freie Ende (6) unterhalb der Wulst (G) des Reifens (B) positioniert wird, und einer Ausfahrposition, in welcher das freie Ende (6) in Übereinstimmung mit dem Bezugselement (4) angeordnet ist, im Wesentlichen über einem vorstehenden Ansatz (7) des Bezugselements liegt, um die Wulst (G) des Reifens (B) über die Kante (F) der Felge (C) herauszuziehen, **gekennzeichnet durch** die Tatsache, dass dieser eine Positioniereinrichtung (16) zum Positionieren des Werkzeugs (3) zwischen der Ausfahrposition und einer Freigabeposition entlang einer Hinweg-/Schließbewegungsrichtung in Bezug zu dem vorstehenden Ansatz (7) umfasst, wobei das freie Ende (6) des Werkzeugs (3) in der Freigabeposition in Bezug zu dem vorstehenden Ansatz (7) zurückgezogen ist.

2. Betriebskopf (1) nach Anspruch 1, **gekennzeichnet durch** die Tatsache, dass die Positioniereinrichtung (16) zum Bewegen des Werkzeugs (3) zwischen der Ausfahrposition und der Freigabeposition entlang einer Hinweg-/Schließbewegungsrichtung in Bezug zu dem Bezugselement (4) bewegt werden kann, wobei das freie Ende (6) des Werkzeugs (3) in Bezug zu dem Bezugselement (4) in der Freigabeposition im Wesentlichen zurückgezogen ist.

3. Betriebskopf (1) nach einem oder mehreren der vorhergehenden Ansprüche, **gekennzeichnet durch** die Tatsache, dass die Trägereinrichtung (2) wenigstens ein Gehäuse umfasst, das zum Aufnehmen wenigstens eines Teils des Werkzeugs (3) in der Freigabeposition geeignet ist.

4. Betriebskopf (1) nach einem oder mehreren der vorhergehenden Ansprüche, **gekennzeichnet durch** die Tatsache, dass dieser eine Stelleinrichtung (8) umfasst, die mit dem Werkzeug (3) verbunden ist und zum Bewegen des Werkzeugs (3) zwischen der Befestigungsposition und der Ausfahrposition geeignet ist.

5. Betriebskopf (1) nach Anspruch 4, **gekennzeichnet durch** die Tatsache, dass die Stelleinrichtung (8) wenigstens ein Stellmittel (8) mit wenigstens einem beweglichen Bereich (10) umfasst, der in einer im Wesentlichen geraden Richtung beweglich ist.

6. Betriebskopf (1) nach Anspruch 5, **gekennzeichnet durch** die Tatsache, dass das Werkzeug (3) mit dem beweglichen Bereich (10) des Stellmittels (8) drehend verbunden ist.

7. Betriebskopf (1) nach einem oder mehreren der vorhergehenden Ansprüche, **gekennzeichnet durch** die Tatsache, dass dieser eine Umwandlungseinrichtung (11, 12, 13, 14, 15) zum Umwandeln der **durch** die Stelleinrichtung (8) erzeugten Bewegung in eine Rotations-/Translationsbewegung des Werkzeugs (3) umfasst, wobei das Werkzeug (3) zwischen der Befestigungsposition und der Ausfahrposition bewegt wird und das im Wesentlichen hakenförmige freie Ende (6) wenigstens teilweise dem Profil der Felge (C) des Rades (D) folgt.

8. Betriebskopf (1) nach Anspruch 7, **gekennzeichnet durch** die Tatsache, dass die Umwandlungseinrichtung (11, 12, 13, 14, 15) wenigstens eine kurvenlineare Führung (12) umfasst, in welche wenigstens ein erster Stift (11) eingreift, der mit dem Werkzeug (3) gleitend verbunden ist.

9. Betriebskopf (1) nach Anspruch 8, **gekennzeichnet durch** die Tatsache, dass die kurvenlineare Führung (12) einen kurvenlinearen Schlitz (12) umfasst, der auf wenigstens einem Träger (5) der Trägereinrichtung (2) vorhanden ist, in welchen der erste Stift (11) gleitend eingreift.

10. Betriebskopf (1) nach Anspruch 9, **gekennzeichnet durch** die Tatsache, dass die Umwandlungseinrichtung (11, 12, 13, 14, 15) aufweist wenigstens eine Verbindungsstange (13) mit einem in Übereinstimmung mit einem zweiten Stift (14) drehend mit dem Träger (5) verbundenen Ende und ein an einen im Wesentlichen mittleren Bereich des Werkzeugs (3) in Übereinstimmung mit einem dritten Stift (15) angelenktes entgegengesetztes Ende.

11. Betriebskopf (1) nach einem oder mehreren der vorhergehenden Ansprüche, **gekennzeichnet durch** die Tatsache, dass die Positioniereinrichtung (16) eine Einstelleinrichtung (16) umfasst, die zum Einstellen der Länge des beweglichen Bereichs (10) der Stelleinrichtung (8) geeignet ist.

12. Betriebskopf (1) nach einem oder mehreren der vorhergehenden Ansprüche, **gekennzeichnet durch** die Tatsache, dass die Positioniereinrichtung (16) eine Einstelleinrichtung zum Einstellen der Position der Stelleinrichtung (8) und/oder des beweglichen Bereichs (10) in Bezug zu der Trägereinrichtung (2) umfasst.

13. Betriebskopf (1) nach einem oder mehreren der vorhergehenden Ansprüche, **gekennzeichnet durch** die Tatsache, dass die Positioniereinrichtung (16) aus der Stelleinrichtung (8) besteht, wobei die Stelleinrichtung (8) wenigstens ein mehrstufiges Stellglied umfasst, das zum Bewegen des Werkzeugs (3) zwischen der Befestigungsposition und der Ausfahrposition und zwischen der Ausfahrposition und der Freigabeposition geeignet ist.

14. Betriebskopf (1) nach Anspruch 11, **gekennzeichnet durch** die Tatsache, dass der bewegliche Bereich (10) der Stelleinrichtung (8) umfasst:
- wenigstens eine erste Stange (18), die mit einem fixierten Bereich (9) der Stelleinrichtung (8) operativ verbunden ist und in Bezug zu dem fixierten Bereich (9) bewegbar ist, um das Werkzeug (3) zwischen der Befestigungsposition und der Ausfahrposition zu bewegen;
- wenigstens eine zweite Stange (19), die mit dem Werkzeug (3) verbunden ist und koaxial zu der ersten Stange (18) angeordnet ist;
und **durch** die Tatsache, dass die Einstelleinrichtung (16) zum Einstellen der Länge des beweglichen Bereichs (10) eine Schraube/Mutter-Schraubverbindungseinrichtung (16) umfasst, die zwischen der ersten Stange (18) und der zweiten Stange (19) angeordnet ist.

15. Betriebskopf (1) nach Anspruch 14, **gekennzeichnet durch** die Tatsache, dass die Schraube/Mutter-Schraubverbindungseinrichtung (16) wenigstens einen Gewindebereich (20, 21) aufweist, der entlang wenigstens eines Abschnitts wenigstens einer unter der ersten Stange (18) und der zweiten Stange (19) hergestellt ist, und wenigstens ein Verbindungselement (22), das mit der ersten und zweiten Stange (18, 19) drehend verbunden ist und wenigstens ein Gewindeloch aufweist, in welches der Gewindebereich (20, 21) eingreift, wobei die Drehung des Verbindungselements (22) in einer Richtung oder der anderen des Verbindungselements (22) zum Annähern oder Wegbewegen der ersten und zweiten Stange (18, 19) zu-/voneinander geeignet ist, indem der bewegliche Bereich (10) des Stellmittels (8) gekürzt oder verlängert wird.

16. Betriebskopf (1) nach Anspruch 15, **gekennzeichnet durch** die Tatsache, dass die Schraube/Mutter-Schraubverbindungseinrichtung (16) aufweist einen ersten Gewindebereich (20), der an dem Ende der ersten Stange (18), das dem fixierten Bereich (9) des Stellmittels (8) entgegengesetzt ist, ausgebildet ist, und wenigstens einen zweiten Gewindebereich (21), der an dem Ende der zweiten Stange (19), das dem Werkzeug (3) entgegengesetzt ist, ausgebildet ist, wobei der erste und zweite Gewindebereich (20, 21) innerhalb jeweiliger Gewindelöcher sitzen, die an dem Verbindungselement (22) ausgebildet sind.

## Revendications

1. Tête fonctionnelle (1) pour le démontage et le montage de pneumatiques de roues pour véhicules, comprenant des moyens de support (2), pouvant être fixés au bras mobile (E) d'une machine de montage/démontage de pneumatiques (A), au moins un élément de référence (4) pouvant être fixé au bras mobile (E) et pouvant être positionné à proximité d'une section du bord (F) de la jante (C) d'une roue (D) fixée sur ladite machine de montage/démontage de pneumatiques (A), lors de l'opération de démontage d'un pneumatique (B) de ladite jante (C), au moins un outil de démontage (3) ayant une extrémité libre (6) sensiblement en forme de crochet, supporté par lesdits moyens de support (2) et mobile entre une position de fixation, dans laquelle ledit outil (3) s'étend depuis lesdits moyens de support (2) au-delà dudit élément de référence (4) pour s'agencer entre ledit bord (F) de la jante (C) et ledit pneumatique (B) et pour positionner ladite extrémité libre (6) en dessous du talon (G) dudit pneumatique (B), et une position d'extraction, dans laquelle ladite extrémité libre (6) est agencée en correspondance avec ledit élément de référence (4), sensiblement superposée à un appendice faisant saillie (7) de l'élément de référence lui-même, pour extraire ledit talon (G) du pneumatique (B) au-dessus dudit bord (F) de la jante (C), **caractérisée en ce qu'**elle comprend des moyens de positionnement (16) pour positionner ledit outil (3) entre ladite position d'extraction et une position de désengagement selon une direction d'éloignement/rapprochement par rapport audit appendice faisant saillie (7), dans laquelle dans ladite position de désengagement ladite extrémité libre (6) de l'outil (3) est en retrait par rapport audit appendice faisant saillie (7).

2. Tête fonctionnelle (1) selon la revendication 1, **caractérisée en ce que** lesdits moyens de positionnement (16) sont aptes à déplacer ledit outil (3) entre ladite position d'extraction et ladite position de désengagement selon une direction d'éloignement/rapprochement par rapport audit élément de référence (4), ladite extrémité libre (6) de l'outil (3) étant sensiblement en retrait par rapport audit élément de référence (4) dans ladite position de désengagement.

3. Tête fonctionnelle (1) selon l'une ou plusieurs des revendications précédentes, **caractérisée en ce que** lesdits moyens de support (2) comprennent au moins un logement apte à loger au moins partiellement ledit outil (3) dans ladite position de désengagement.

4. Tête fonctionnelle (1) selon l'une ou plusieurs des revendications précédentes, **caractérisée en ce qu'**elle comprend des moyens d'actionnement (8) associés audit outil (3) et aptes à déplacer ledit outil (3) entre ladite position de fixation et ladite position d'extraction.

5. Tête fonctionnelle (1) selon la revendication 4, **caractérisée en ce que** lesdits moyens d'actionnement (8) comprennent au moins un dispositif actionneur (8) possédant au moins une portion mobile (10) pouvant se déplacer selon une direction sensiblement rectiligne.

6. Tête fonctionnelle (1) selon la revendication 5, **caractérisée en ce que** ledit outil (3) est associé de façon pivotante à ladite portion mobile (10) du dispositif actionneur (8).

7. Tête fonctionnelle (1) selon l'une ou plusieurs des revendications précédentes, **caractérisée en ce qu'**elle comprend des moyens de transformation (11, 12, 13, 14, 15) pour transformer le mouvement produit par lesdits moyens d'actionnement (8) en un mouvement de rotation-translation dudit outil (3), dans laquelle ledit outil (3) est déplacé entre ladite position de fixation et ladite position d'extraction et ladite extrémité libre sensiblement en forme de crochet (6) suit au moins partiellement le profil de la jante (C) de ladite roue (D).

8. Tête fonctionnelle (1) selon la revendication 7, **caractérisée en ce que** lesdits moyens de transformation (11, 12, 13, 14, 15) comprennent au moins un guide curviligne (12) dans lequel au moins un premier axe (11) s'engage de manière coulissante en association avec ledit outil (3).

9. Tête fonctionnelle (1) selon la revendication 8, **caractérisée en ce que** ledit guide curviligne (12) comprend une fente curviligne (12) obtenue sur au moins un support (5) desdits moyens de support (2) dans laquelle ledit premier axe (11) s'engage de manière coulissante.

10. Tête fonctionnelle (1) selon la revendication 9, **caractérisée en ce que** lesdits moyens de transformation (11, 12, 13, 14, 15) comprennent au moins une bielle (13) possédant une extrémité associée de façon pivotante audit support (5), en correspondance avec un second axe (14), et une extrémité opposée articulée à une portion sensiblement intermédiaire dudit outil (3), en correspondance avec un troisième axe (15).

11. Tête fonctionnelle (1) selon l'une ou plusieurs des revendications précédentes, **caractérisée en ce que** lesdits moyens de positionnement (16) comprennent des moyens d'ajustement (16) aptes à ajuster la longueur de ladite portion mobile (10) du dispositif actionneur (8).

12. Tête fonctionnelle (1) selon l'une ou plusieurs des revendications précédentes, **caractérisée en ce que** lesdits moyens de positionnement (16) comprennent des moyens d'ajustement pour ajuster la position dudit dispositif actionneur (8) et/ou de ladite portion mobile (10) par rapport auxdits moyens de support (2).

13. Tête fonctionnelle (1) selon l'une ou plusieurs des revendications précédentes, **caractérisée en ce que** lesdits moyens de positionnement (16) sont constitués dudit dispositif actionneur (8), dans laquelle ledit dispositif actionneur (8) comprend au moins un actionneur multi-étages apte à déplacer ledit outil (3) entre ladite position de fixation et ladite position d'extraction et entre ladite position d'extraction et ladite position de désengagement.

14. Tête fonctionnelle (1) selon la revendication 11, **caractérisée en ce que** ladite portion mobile (10) du dispositif actionneur (8) comprend :
- au moins une première tige (18) fonctionnellement associée à une portion fixe (9) dudit dispositif actionneur (8) et mobile par rapport à ladite portion fixe (9) pour déplacer ledit outil (3) entre ladite position de fixation et ladite position d'extraction ;
- au moins une seconde tige (19) associée audit outil (3) et agencée coaxiale à ladite première tige (18) ;
et **en ce que** lesdits moyens d'ajustement (16) pour ajuster la longueur de la portion mobile (10) comprennent des moyens de couplage vis vis-écrou (16) placés entre ladite première tige (18) et ladite seconde tige (19).

15. Tête fonctionnelle (1) selon la revendication 14, **caractérisée en ce que** lesdits moyens de couplage vis vis-écrou (16) comprennent au moins une portion filetée (20, 21) réalisée suivant au moins une section d'au moins une parmi ladite première tige (18) et ladite seconde tige (19), et au moins un élément de liaison (22) associé de manière pivotante auxdites première et seconde tiges (18, 19) et possédant au moins un trou taraudé dans lequel ladite portion filetée (20, 21) est engagée, la rotation dudit élément de liaison (22) dans un sens ou dans l'autre dudit élément de liaison (22) étant apte à rapprocher ou éloigner l'une de l'autre lesdites première et seconde tiges (18, 19), en raccourcissant ou rallongeant ladite portion mobile (10) du dispositif actionneur (8).

16. Tête fonctionnelle (1) selon la revendication 15, **caractérisée en ce que** lesdits moyens de couplage vis vis-écrou (16) comprennent une première portion filetée (20) réalisée à l'extrémité de ladite première tige (18) à l'opposé de ladite portion fixe (9) du dispositif actionneur (8) et au moins une seconde portion filetée (21) réalisée à l'extrémité de ladite seconde tige (19) à l'opposé dudit outil (3), lesdites première et seconde portions filetées (20, 21) étant montées à l'intérieur de trous taraudés respectifs réalisés sur ledit élément de liaison (22).
